# EUROPEAN PATENT SPECIFICATION

(11) **EP 4 088 045 B1**
(45) Date of publication and mention of the grant of the patent: **20.08.2025**
(21) Application number: 21738920.4
(22) Date of filing: 08.01.2021
(51) Int. Cl.: F16H 7/12, F16H 1/00, F16H 7/08, F16H 7/10, F16H 7/14

(54) **ADJUSTABLE DAMPING MECHANISM FOR TENSIONER DEVICE**
EINSTELLBARER DÄMPFUNGSMECHANISMUS FÜR SPANNVORRICHTUNG
MÉCANISME D'AMORTISSEMENT RÉGLABLE POUR DISPOSITIF TENDEUR

(30) Priority: 08.01.2020 US 202062958409 P
(43) Date of publication of application: 16.11.2022
(73) Proprietor: Gates Corporation, Denver, CO 80202 (US)
(72) Inventor: SERKH, Alexander, Troy, Michigan 48098 (US); MORA, Anthony R., Waterford, Michigan 48327 (US)
(74) Representative: Carpmaels & Ransford LLP
(86) International application number: PCT/US2021/012566
(87) International publication number: WO 2021/142176

(56) References cited:
- EP-A1- 0 866 240
- EP-A1- 2 955 414
- WO-A1-2019/184342
- US-A1- 2008 119 310
- US-A1- 2011 015 016
- US-B1- 6 231 465
- US-B2- 8 157 682
- US-B2- 8 439 781

## Description

### FIELD

The present invention relates generally to a belt tensioner, and more particularly to systems and techniques for adapting a tensioner to the characteristics of an associated belt and/or biasing element.

### BACKGROUND

Belt tensioners are used to impart a load on a belt. The belt load prevents the belt from slipping on one or more entrained pulleys during operation. Typically, the belt is used in an engine application for driving various accessories associated with the engine. For example, an air conditioning compressor and alternator are two of the accessories that may be driven by a belt drive system.

A belt tensioner may include a pulley journalled to an arm. A spring is connected between the arm and a base. The spring may also engage a damping mechanism. The damping mechanism comprises frictional surfaces in contact with each other. The damping mechanism damps an oscillatory movement of the arm caused by operation of the belt drive. This in turn enhances belt life expectancy.

Accessory belts may have a range of acceptable length tolerances that may result in belt tensioners imparting different forces to the belt than they were nominally designed to create because of the differing lengths of the belt. The variation in belt lengths (even within acceptable tolerances) may cause large differences in belt tension, tensioner performance, and component life. Springs may also have a range of acceptance stiffness tolerances that may result in the belt tensioners imparting different forces to the belt than they were nominally designed to create because of the differing spring stiffness. As such, the need continues for systems and techniques to tune the tensioner to the characteristics of an associated belt and/or spring with which the tensioner is associated.

WO 2019/184342 A1 discloses a variable-stiffness and high-damping automatic tensioner, comprising a tensioning arm, a housing, a first damping device, a second damping device, a torsion spring, a tensioning pulley, a mandrel, a rolling bearing and a wear-resistant plastic bushing, wherein the housing is fixed to an engine body; the mandrel is fixed to the housing; the tensioning arm is pivotably mounted on the mandrel by means of the wear-resistant plastic bushing; the belt pulley is mounted to an end, far away from the mandrel, of the tensioning arm by means of the rolling bearing; a housing accommodation cavity is provided inside the housing; the torsion spring is arranged inside the housing accommodation cavity, and the other end of the torsion spring abuts against a tensioning arm spring seat of the tensioning arm; the first damping device and the second damping device are oppositely arranged on an upper portion of the housing accommodation cavity; and one end of the first damping device abuts against the tensioning arm, and the other end thereof abuts against a torsion arm of the torsion spring.

### SUMMARY

The present invention provides tensioner devices, assemblies and methods of manufacture thereof.

In particular, the present invention provides a tensioner device according to claim 1. Optional features are recited in the dependent claims.

The present invention also provides an assembly according to claim 5. Optional features are recited in the dependent claims.

The present invention also provides a method of manufacturing a tensioner device and belt assembly according to claim 10. Optional features are recited in the dependent claims.

In addition to the exemplary aspects and examples described above, further aspects and examples will become apparent by reference to the drawings and by study of the following description.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 depicts an exploded view of a sample tensioner device;
FIG. 2A depicts the tensioner device and belt assembly in a first configuration;
FIG. 2B depicts the tensioner device and belt assembly in a second configuration;
FIG. 2C depicts the tensioner device and belt assembly in a third configuration;
FIG. 3A depicts a biasing element having a nominal stiffness;
FIG. 3B depicts a biasing element having a positive deviation from the nominal stiffness;
FIG. 3C depicts a biasing element having a negative deviation from the nominal stiffness;
FIG. 4 depicts an exploded view of a sample damping assembly and biasing element of the present disclosure;
FIG. 5A depicts the damping assembly in a first configuration;
FIG. 5B depicts a chart showing the displacement of the biasing element in the first configuration of the damping assembly relative to a center line of a tensioner device;
FIG. 6A depicts the damping assembly in a second configuration;
FIG. 6B depicts a chart showing the displacement of the biasing element in the second configuration of the damping assembly relative to a center line of a tensioner device;
FIG. 7A depicts the damping assembly in a third configuration;
FIG. 7B depicts a chart showing the displacement of the biasing element in the third configuration of the damping assembly relative to a center line of a tensioner device;
FIG. 8 depicts a diagram showing relationships between torque and belt tension for various belt lengths;
FIG. 9 depicts another diagram showing relationship between torque and belt tensioner for various belt lengths; and
FIG. 10 a diagram showing relationships between torque and belt tension for various stiffness of a biasing element;
FIG. 11 another diagram showing relationships between torque and belt tension for various stiffness of a biasing element; and
FIG. 12 depicts a flow diagram for manufacturing a tensioner device and belt assembly.

### DETAILED DESCRIPTION

The description that follows includes sample systems, methods, and apparatuses that embody various elements of the present disclosure. However, it should be understood that the described disclosure may be practiced in a variety of forms in addition to those described herein.

Before referring to the Figures, a brief explanation is provided. The present disclosure describes tensioner devices and assemblies and methods of manufacture thereof. A sample tensioner device of the present disclosure may use a biasing element in order to create a target tension in an associated belt. The biasing element may be arranged at a position within the tensioner device based on measured characteristics exhibited by the biasing element, such as a stiffness of the biasing element. The tensioner device may therefore be tuned to impart a desired force on the associated belt notwithstanding differences in the stiffness, which could otherwise cause variations in the imparted force. The tensioner device may also be tuned to match the characteristics of the specific belt with which the tensioner is associated. For example, the biasing element may additionally or alternatively be arranged in a loaded configuration that is adapted to impart the desired force on the associated belt based on a measured length of the belt. Tensioners that merely include biasing elements set to a nominal spring stiffness and/or nominal belt length thus fail to account for the effects of stiffness and length deviation, which may produce inappropriate belt tensions and contribute to increased wear and reduced belt life.

The tensioner devices, assemblies, and methods of manufacture thereof of the present disclosure may mitigate such hindrances by tuning a tensioner device to accommodate the measured stiffness of the spring and/or the measured length of the belt. To facilitate the foregoing, the example tensioner device may include a damping assembly. The damping assembly may be adapted to locate a portion, such as an end portion, of the biasing element at a desired location within the tensioner device. With the portion properly located, the biasing element may be arranged within the tensioner device in a manner that controls spring deflection. For example, the end portion or other portion of the biasing element, may be welded, glued, or otherwise connected or fixed with the damping assembly so that the biasing element exhibits a desired preload when the tensioner device engages a belt.

The belt may be engaged by an engagement member of the tensioner device. The engagement member may be angularly displaceable relative to a base of the tensioner device and a portion of the biasing element in order to tension the belt. The engagement member may generally move with the damping assembly, and rotate relative to the base, and the biasing element is connected to both the damping assembly and the base. Thus, the angular displacement of the engagement member generally corresponds to a compression, or deflection or other adjustment that allows the biasing element to store energy for defining a preload force.

The tensioner device may be constructed so that when the biasing element is connected to the damping assembly at a nominal position, the engagement member is generally angularly displaceable relative to the base and the biasing element in a 1:1 manner. Biasing elements, however, such as torsion springs, may be formed with spring stiffness tolerances of ± 7%, as one example. In this regard, it may be desirable to compress the biasing element less or more in order to achieve a target preload with the biasing element. For the sake of a non-limiting example, the tensioner device may be designed so that the biasing element exhibits 20 Nm of preload when the engagement member is angularly displaced by 60° relative to the base, or more generally, the tensioner centerline or other reference axis of the tensioner device. This implies a nominal spring rate of 0.333 Nm/deg, where the engagement member is angularly displaceable relative to the base and the biasing element in a 1:1 manner. However, where the actual spring associated with the tensioner device has a different spring rate, e.g., within the tolerance, the resulting preload would deviate from the target 20 Nm.

The tensioner device of present disclosure accounts for the deviation in the actual stiffness of the associated biasing element in order to deliver the target preload, notwithstanding the stiffness of the spring. In one example, a value of the angular displacement of the engagement member relative to the biasing element may be manipulated so that the biasing element is compressed based on actual or measured stiffness of the spring. Structures and techniques described herein allow the biasing element to be connected to the damping assembly so that the engagement member is angularly displaceable relative to the base in a manner that is different than the angular displacement of the engagement member relative to the biasing element. The compression of the biasing element may therefore be precisely tuned in order to generate the desired preload.

Continuing the non-limiting example above, the measured stiffness of the biasing element may be higher than the nominally implied stiffness of 0.333 Nm/deg, such as having a measured stiffness of 0.363 Nm/deg. In order to achieve the desired 20 Nm of preload with the stiffer spring, the examples described herein allow the spring end to be moved from its nominal position in the damping assembly so that the angular displacement of the engagement member relative to the base or centerline of the tensioner is different than the angular displacement of the engagement member relative to the biasing element end. This may allow the biasing element to be compressed to an appropriate level with the angular displacement of the engagement member so as to still exhibit the 20 Nm preload, notwithstanding the increased stiffness. For example, the biasing element may be arranged so that the engagement member is angularly displaced 60° from the centerline, the biasing element is angularly displaced 55°. And because the biasing element is displaced 55°, it may exhibit the target preload of 20 Nm, despite the increased stiffness of the biasing element.

It will be appreciated that the foregoing is one example of a tensioner device and desired preload. The tensioner devices of the present disclosure may be adapted to deliver a variety of different preloads based on application specification criteria, such as the application of the tensioner device to certain automotive or industrial settings. The tensioner device may use the measured stiffness of the biasing element to arrange the biasing element in the tensioner device so that the desired load is imparted on the associated belt. This may include connecting the biasing element to the damping assembly at an offset from a nominal position to account for positive or negative deviations in the spring stiffness, and allow the tensioner device to impart the desired force on the associated belt, notwithstanding the stiffness, for a variety of loads and stiffness values that may be different than those in the non-limiting example above.

The tensioner devices of the present disclosure may also be adapted to generate a target tension in an associated belt based on a measured length of the belt. The biasing element may be configured to exhibit a desired preload based on a nominal length of the belt. As a non-limiting example, the tensioner device may be constructed for a belt with a 200 mm nominal length, with which the engagement member is generally angularly displaceable by around 60° in order to tension the belt in an initial state with a 20 Nm preload from the biasing element. Continuing the example, where the belt length deviates from the nominal length, the engagement member may be generally angularly displaceable by around greater or less than the 60°, which would in turn cause the preload to change.

The damping assembly described herein may therefore be used to arrange the biasing element in a loaded configuration so that the biasing element exhibits the desired preload, notwithstanding the length of the belt. For example, the biasing element may be connected to the damping assembly in a loaded configuration and/or at an offset from a nominal position so that when the engagement member is angularly displaced, the biasing element is compressed in a manner that causes the biasing element to exhibit a preload for tensioning the belt to the target tension. Other configurations are possible and described herein, including configurations in which the biasing element is arranged with the damping assembly based on both the measured belt length and the measured stiffness of the spring to create the target tension in the belt.

Reference will now be made to the accompanying drawings, which assist in illustrating various features of the present disclosure. The following description is presented for purposes of illustration and description. Furthermore, the description is not intended to limit the inventive aspects to the forms disclosed herein. Consequently, variations and modifications commensurate with the following teachings, and skill and knowledge of the relevant art, are within the scope of the present inventive aspects.

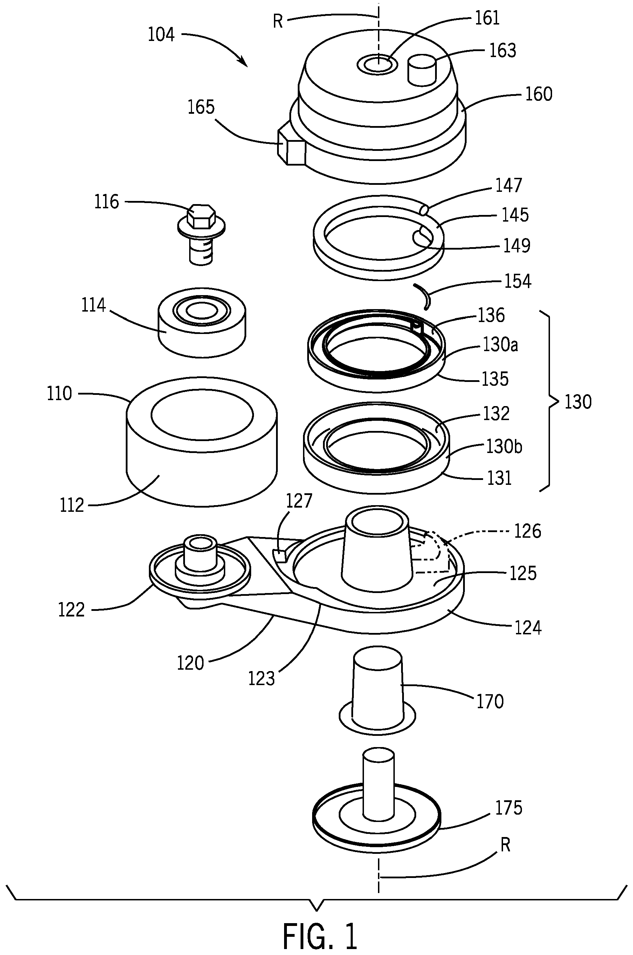

FIG. 1 depicts an exploded view of a tensioner device 104, such as the tensioner devices discussed above and described in greater detail below. The tensioner device 104 includes an engagement member 110 for engaging a run of a belt. For example, the tensioner device 104 may define an engagement surface 112 adapted to contact a belt and press into the belt in order to impart a force on the belt. In some cases, the engagement member 110 may be a pulley or other structure having a curved surface with the engagement surface 112 being a continuous outer circumferential surface thereof. The engagement member 110 is adapted to rotate about a lever arm axis R-R defined by the tensioner device 104. With this rotation, the engagement member 110 may exhibit a bias relative to its position about the lever arm axis so that the engagement surface 112 may impart the target force to the engaged belt.

To facilitate the foregoing, the tensioner device 104 includes an arm 120. The arm 120 may generally structurally connect the engagement member 110 to the level arm axis R-R and various biasing elements and mechanisms therein. For the example, the arm 120 may define receiving features and/or landings for the engagement member and other components of the tensioner device 104. As shown in FIG. 1, the arm includes an engagement member portion 122 for coupling with the engagement member 110 and an axis portion 124 for coupling with other components of the tensioner device 104 along the lever arm axis R-R. A bridge 123 is situated there between and may be defined by a plate or bracket structure with a width that is coextensive with one or both of the engagement member or axis portions 122, 124 for receiving and landing the respective components of each.

The engagement member 110 may be connected to the arm 120 at the engagement member portion 122, and positionally and/or rotationally fixed relative thereto. In some cases, the bearing member 114 and fastener 116 may be provided to facilitate the connection of the engagement member 110 and the arm 120. The bearing member 114 may be received or included in the engagement member 110. Possible constructions include the engagement member 110 being molded over the bearing member 114 and/or where the engagement member 110 optionally defines one or more recesses. The bearing member 114 may be press fit into the recess. The fastener may be a bolt, screw, or other features that secures the engagement member 110 to the arm 120. For example, the fastener 116 may be received through the bearing member 114 and at least partially into the arm 120 at the engagement member portion 122 to rotationally and/or positionally fixed the engagement member 110.

At the axis portion 124, the arm 120 may define a damping assembly landing 125. The damping assembly landing 125 is configured to generally receive one or more damping assemblies of the present invention thereon. For example, the damping assembly landing 125 may be adapted to receive a collection of components that damps oscillatory movements of the arm 120. More generally the damping assembly landing 125 may receive and/or provide a support for components that are associated with one or more biasing elements for providing a preload force to the engagement member to create the target tension in the belt. The arm 120 may optionally include a tab 126 (shown in phantom) for properly orientating the damping assembly on the damping assembly landing 125, as may be appropriate for certain applications.

FIG. 1 also shows a damping assembly 130 and biasing element 145. The damping assembly 130 and the biasing element 145 cooperate so that the engagement member 110 may impart a desired force on a belt when engaged with the belt. For example, the biasing element 145 is connected with the damping assembly 130, and the damping assembly 130 may move with the angular displacement of the engagement member 110 in a manner that compresses the biasing element 145 or otherwise causes the biasing element 145 to exhibit a preload force. As explained in greater detail herein, the biasing element 145 may be arranged within the damping assembly 130 based on a measured stiffness of the biasing element. As one example, where the biasing element 145 is stiffer than a nominal stiffness, the biasing element 145 may be arranged within the damping assembly 130 so that the biasing element is compressed less for a given angular displacement of the engagement member 110, but thus still generates the desired force, because it is stiffer, and needs less compression to do so.

To facilitate the foregoing, the damping assembly 130 includes an insert 130a and a shoe 130b. The insert 130a may define a biasing element receiving portion 136 that is adapted to receive the biasing element 145 for seating therein. A weld 154 is provided to connect the biasing element 145 to the insert 130a. The biasing element 145 is a torsion spring having a first end 147 and a second end 149, and the weld 154 is used to connect the second end 149 to the insert 130a. As explained herein, the weld 154 may be arranged precisely within the insert 130a so as to connect the biasing element 145 at a nominal position or offset therefrom, so that the biasing element compresses as desired for creating the target preload.

The shoe 130b is used to associate the damping assembly 130 with the arm 120. The shoe 130b defines an interface between the insert 130a and the arm 120. To facilitate this relationship, the shoe 130b may have a shoe base 131 that may be seated on the damping assembly landing 125. In certain configurations, the shoe base 131 may also be configured to engage with the tab 126 or other feature of the arm 120 in order to properly align the damping assembly 130 thereon. The shoe 130b also defines an insert receiving portion 132 that is adapted to receiving the insert 130a with the biasing element 145 connected therein. The insert 130a has an insert base 135 that is received into the insert receiving portion 132, and may be press-fit, frictionally engaged, or otherwise secured therein.

The damping assembly 130 is associated with a base 160 of the tensioner device 104. For example, the damping assembly 130 may be received within the base 160 and configured to rotate relative thereto, such as around or about the lever arm axis R-R which may generally be defined by the tensioner device 104. To facilitate the foregoing, a bushing 170 may rotationally couple the arm 120 to the base 160, such as pivotally coupling the arm 120 to the base 160 at the axis portion 124. This may allow the arm 120 to be angularly displaceable relative to the base 160 or other centerline or reference point of the tensioner device 104. As the arm 120 angularly displaced relative to the base 160, the damping assembly 130, which is seated on the damping assembly landing 125, may move correspondingly about the lever arm axis R-R.

The base 160 may define a structural component of the tensioner device 104 that is used to associate the tensioner device 104 with other components of an automotive or industrial system. The tensioner device 104 may be used in a broad range of automotive and industrial applications, and the base 160 may therefore positionally fix and support the tensioner device 104 in such systems, and in a manner that allows the engagement member 110 to impart force on the associated belt. The base 160 shown in FIG. 1 includes a connection point 161. The connection point 161 may be a receiving feature extending into the base and along the lever arm axis R-R; however, this is not required. The base 160 also defines a protrusion 163, which may be an anti-rotation component of the tensioner device 104 or a component that otherwise cooperates with the connection point to limit rotation of the base 160, about the lever arm axis R-R. It will be appreciated, however, that in other configurations, more or fewer, or different types of connecting points and/or anti-rotation features may be provided.

The base 160 also operates to substantially enclose the damping assembly 130 and biasing element 145. For example, the base 160 may define an interior volume and the biasing element 145 and the damping assembly 130 may be received within the interior volume. In certain examples, the base 160 may define an alignment feature 165. The base 160 may be generally arranged on the arm 120 and the alignment features 165 may optionally limit or prescribe a range of motion of the arm 120 relative to the base 160. For example, the arm 120 may include a guide 127 positioned on the bridge 123 and/or the damping assembly landing 125. The guide 127 may receive some or all of the alignment features 165 therein when the base 160 substantially encloses the biasing element 145 and the damping assembly 130. The biasing element 145 and the damping assembly 130 may also be substantially enclosed via a dust cap 175 that is installed substantially under the arm 120 at the axis portion 124.

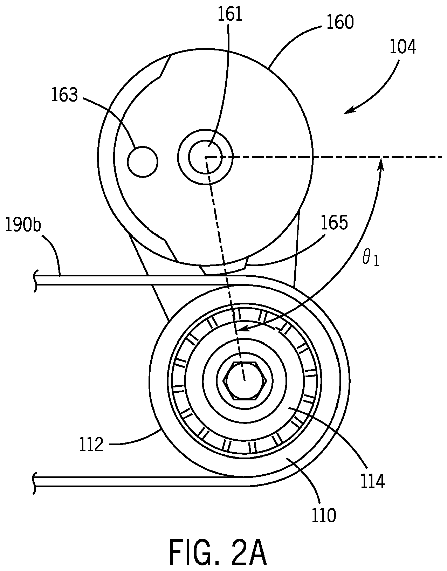

FIGS. 2A-2C shown the tensioner device 104 engaged with belts of various lengths. The tensioner device 104 may be adapted to create a target tension in the belt notwithstanding the length of the belt. For example, the biasing element 145 may be arranged within the tensioner device 104 so that the biasing element 145 delivers an appropriate preload to tension to the belt, notwithstanding the length of the belt. This may be accomplished, in one embodiment, by arranging the biasing element 145 in a loaded configuration that is tailored to bias the engagement member 110 for movement in an amount required to tension the belt based on the belt length. To facilitate the foregoing, the biasing element 145 may be connected to the damping assembly 130 so that the compression of the biasing element 145 is tuned based on the angular rotation of the engagement member 110 relative to the base 160. For example, at nominal position, which could correspond to a nominal belt length, the engagement member 110 may be angularly displaced relative to an end of the biasing element in a substantially 1:1 manner. In cases where the belt is deviated from the nominal length it may be beneficial for the spring to compress more or less (as compared with the nominal case) with the angular displacement of the engagement member relative to the base 160, in order to create the target tension in the belt, notwithstanding the length of the belt.

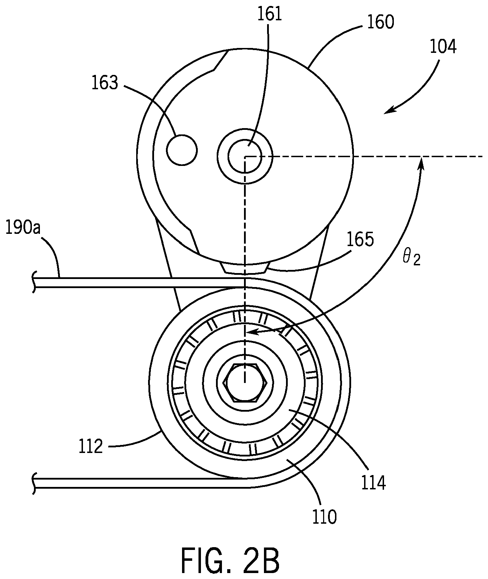

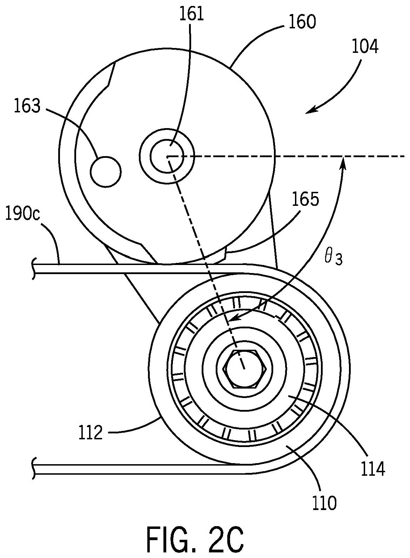

To illustrate and with reference to FIG. 2A, the tensioner device 104 is shown in a first configuration in which a belt 190a has a nominal length. In the first configuration, the engagement member 110 exerts a first force on the belt 190a to create the target tension in the belt 190a. With reference to FIG. 2B, the tensioner device 104 is depicted in a second configuration in which a belt 190b has a measured length less than the nominal length, e.g., a "short" belt or negative length variation. In the second configuration, the engagement member 110 exerts a second force on the belt 190b to create the target tension in the belt 190b. With reference to FIG. 2C, the tensioner device 104 is depicted in a third configuration in which a belt 190c has a measured length greater than the nominal length, e.g., a "long" belt or positive length variation. In the third configuration, the tensioner device 104 exerts a third force on the belt 190c to create the target tension in the belt 190.

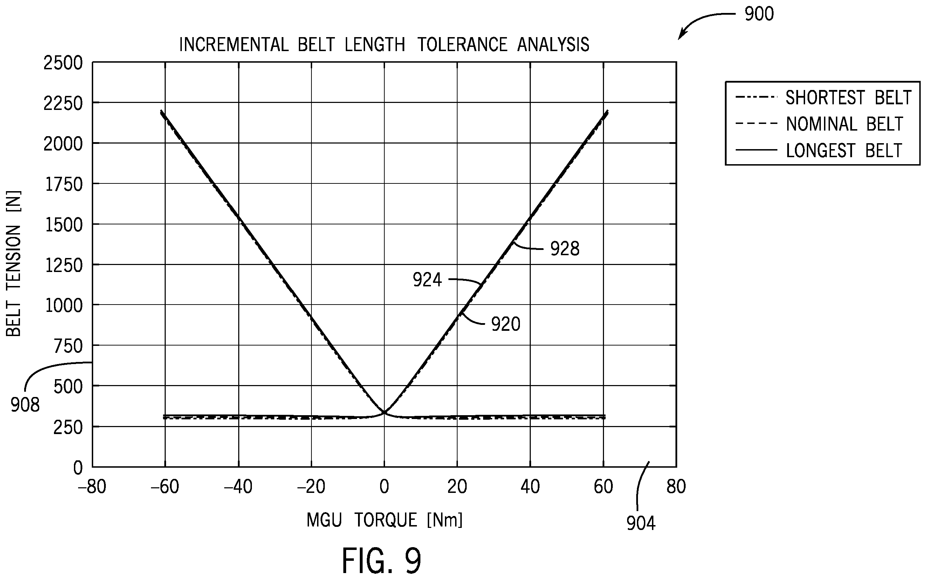

By tuning the tensioner device 104 to the length of the particular belt with which it is associated, (e.g. notwithstanding the differing lengths of the belts 190a, 190b, 190c in FIGS. 2A-2C), each of the belts 190a, 190b, 190c may exhibit the same target tension. More generally, the belts of FIGS. 2A-2C may generally operate according to the same tension versus torque characteristic (depicted in the diagram of FIG. 9), despite the belts 190a, 190b, 190c having different actual or measured lengths. In the first configuration of FIG. 2A, the engagement member 110 may be positioned at an angular displacement θ₁ from a centerline which may be defined by the base 160. In the second configuration of FIG. 2B, the engagement member 110 may be positioned at an angular displacement θ₂ from a centerline which may be defined by the base 160. The shorter belt in the second configuration causes the engagement member 110 to rotate further from the centerline, and thus the angular displacement θ₂ is greater than the angular displacement θ₁. And because the belt 190b in the second configuration is shorter than the belt 190a in the first configuration, it needs less force (from the engagement member) in order to achieve the same tension. Further, in the third configuration of FIG. 2C, the engagement member 110 may be positioned at an angular displacement θ₃ from a centerline which may be defined by the base 160. The longer belt in the third configuration causes the engagement member 110 to rotate less from the centerline, and thus the angular displacement θ₃ is less than the angular displacement θ₁. And because the belt in the third configuration is longer than the belt in the first configuration, it needs more force (from the engagement member) in order to achieve the same tension. As explained herein, this is facilitated by manipulating the biasing element 145 to a loaded configuration that causes the engagement member to have the appropriate force (e.g., the first force, the second force, the third force of FIGS. 2A-2C, and so on) so that the belts 190a, 190b, 190c may be tensioned to the target tension.

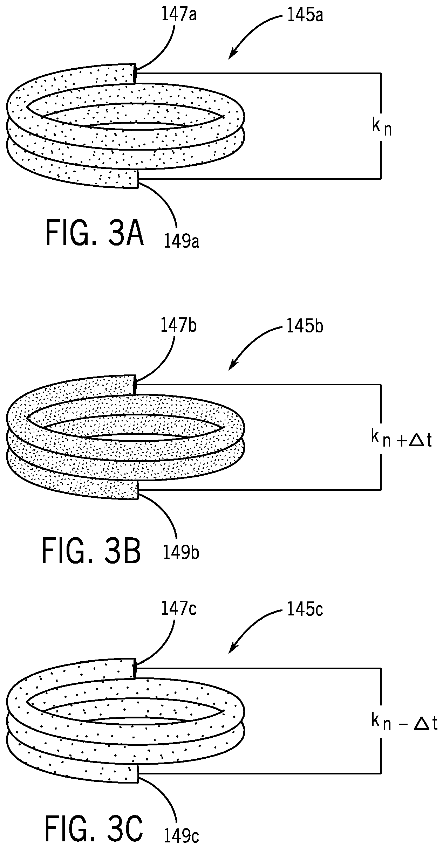

FIGS. 3A-3C show examples of a biasing element, such as the biasing element 145 of FIG. 1. Biasing elements may exhibit a measured stiffness. The measured stiffness may be expressed in terms of a force component (e.g., Nm) per degree of compression of the biasing element. The stiffness may vary from a nominal stiffness, for example, by ±7% or more. Where the stiffness deviates from the nominal stiffness, the amount of force associated with a compression of the biasing element changes. As one illustration, a biasing element with a 0.333 Nm/deg stiffness would exhibit a preload of 20 Nm at a 60° displacement or compression, whereas a biasing element with a 0.363 Nm/deg stiffness (e.g., a stiffer deviation from the nominal stiffness) would exhibit a preload of 21.8 Nm at a 60° displacement or compression. In certain examples, the tensioner device 104 may allow the stiffer spring to effectively be displaced or compressed less so that it exhibits a similar 20 Nm preload (e.g., where the stiffer spring is displaced or compressed by around 55°).

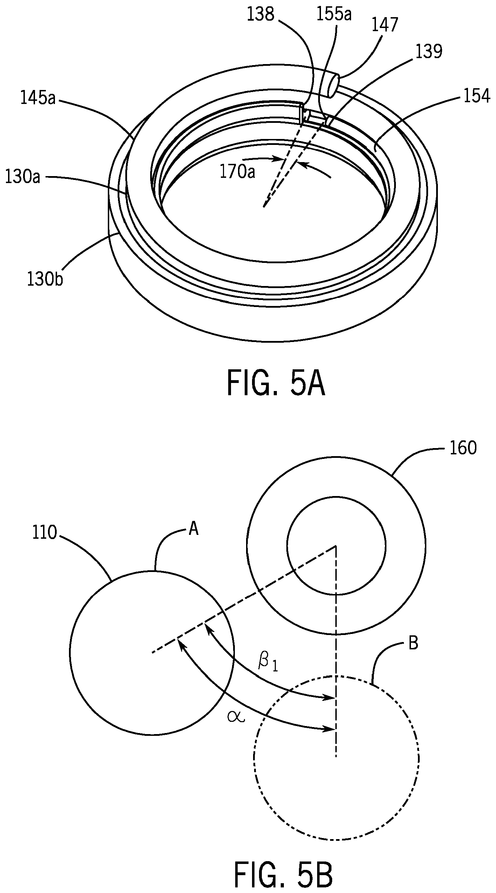

To illustrate and with reference to FIG. 3A, a biasing element 145a is shown having a first end 147a and a second end 149a. The biasing element 145a may be associated with a stiffness kₙ, which may correspond to a value of force used to angularly displace the first and second ends 147a, 149a relative to one another. With reference to FIG. 3B, a biasing element 145b is shown having a first end 147b and a second end 149b. The biasing element 145b may be associated with a stiffness k_{n+Δt}, which may correspond to a value of force used to angularly displace the first and second ends 147b, 149b relative to one another, where +Δt corresponds to a maximum positive deviation from the nominal stiffness kₙ based on a tolerance of the biasing element 145b. And with reference to FIG. 3C, a biasing element 145c is shown having a first end 147c and a second end 149c, where -Δt corresponds to a maximum negative deviation from the nominal stiffness kₙ based on a tolerance of the biasing element 145c. The biasing element 145c may be associated with a stiffness k_{n-Δt}, which may correspond to a value of force used to angularly displace the first and second ends 147a, 149a relative to one another. Notwithstanding the different stiffness values, the biasing elements 145a, 145b, 145c, may be arranged within the tensioner device to deliver a consistent preload force. For example and as described in greater detail below with respect to FIGS. 5A-7C, the biasing elements 145a, 145b, 145c may be arranged so that the respective biasing elements are compressed by a different amount, based on the stiffness but still deliver a consistent preload.

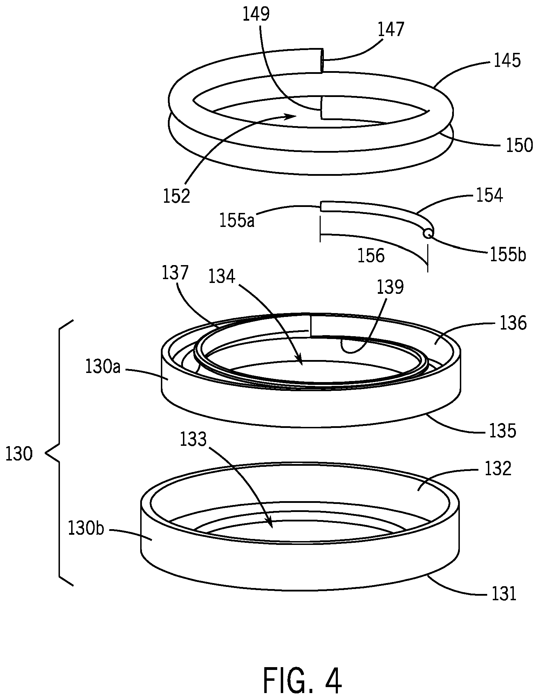

Turning to FIG. 4, the damping assembly 130 may facilitate the foregoing functionality by controlling the deflection by properly locating and securing a portion of the biasing element within the tensioner device 104. To illustrate, FIG. 4 depicts an exploded view of the biasing element 145, the weld 154, and the damping assembly 130.

The biasing element 145 is shown as a torsion spring. The torsion spring may have opposing spring ends 147, 149. A body 150 of the torsion spring may progress in a generally spiral pattern substantially between the opposing ends 147, 149. The body 150 defines a hollow center 152 about which the spiral is positioned. The hollow center 152 allows for placement of other components of the tensioner device 104 there through, such as components of the arm 120 as one example. It will be appreciated that other biasing elements and associated structures and assemblies are contemplated herein.

The biasing element 145 is associated with and connected to the damping assembly 130. For example, the weld 154 is used to fix a portion of the biasing element 145 to the damping assembly 130. Glues and other adhesives may be additionally or alternatively implemented. The weld 154 may have opposing weld ends 155a, 155b and a weld length 156. The weld 154 may be an elongated form between the weld ends 155a, 155b, and adapted to be received within the biasing element receiving portion 136 of the insert 130a. It will be appreciated that the weld length 156 may be any appropriate value to facilitate the connection of the biasing element 145 and the dampening assembly 130. In some cases, the length 156 can be adapted in order to tune a characteristic of the biasing element 145, such as the effective spring rate.

The weld 154 or other connection means may be used to properly locate a portion of the biasing element relative to the damping assembly 130. As explained herein, this allows the biasing element 145 to be angularly displaced or otherwise compressed at a tunable value relative to the angular displacement of the engagement member 110, when the engagement member 110 engages the belt. As shown in FIG. 4, the biasing element receiving portion 136 may include a track 137 for receiving the biasing element 145 and the weld 154 may associate the biasing element 145 at a particular region or location on the track 137. For example, the track 137 may include nominal position 139. The nominal position 139 may correspond to an arrangement of the biasing element 145 where the relationship between the angular displacement of the engagement member 110 relative to the tensioner centerline and the angular displacement of the engagement member 110 relative to the biasing element 145 is substantially 1:1. As shown in FIGS. 5A-7B, the biasing element may be connected to the insert 130a relative to the nominal position 139 in order to maintain or alter this relationship. The track 137 is shown in FIG. 4 as having a spiral-type shape that may substantially correspond to a shape or contour of the biasing element 145. It will be appreciated, however, that other configurations are possible, which may be based on the implementation of particular different types of biasing elements, and variations thereof.

The shoe 130b is adapted to receive the insert 130a, as described herein. Each of the insert 130a and the shoe 130b includes a through portion to allow for introduction of other components of the tensioner device 104 there through, such as portions of the arm 120. The insert 130a is shown as having an opening 134 and the shoe is shown as having an opening 133. In the assembled configuration, the hollow center 152 of the biasing element 145 and the openings 133, 134 are all aligned with one another and positioned along the lever axis R-R shown in FIG. 1.

FIGS. 5A-7B show examples of the biasing element 145 being associated with the damping assembly 130 at various positions in order to control the deflection of the biasing element 145. This allows the engagement member 110 to be angularly displaced relative to the base 160 in a manner that may be different than an angular displacement of the engagement member 110 relative to the biasing element 145. In application, this may allow the tensioner device 104 to be adaptable to the particular characteristics of the biasing element, such as a measured spring stiffness, so that the tensioner device 104 may consistently tension a belt notwithstanding the differences in stiffness.

In the example of FIGS. 5A and 5B, the damping assembly 130 is shown associated with the biasing element 145a. The biasing element 145a may generally be a biasing element having a measured stiffness that is roughly equivalent to the nominal stiffness. In this regard, the biasing element 145a may be connected to the damping assembly 130 with an end portion properly located relative to the nominal position 139. The nominal position 139 may be located at an angular displacement 170a from a stop feature 138 of the track 137. When the biasing element 145a is properly located relative to the nominal position 139, the angular displacement of the biasing elements ends may roughly correspond in a 1:1 manner with the angular displacement of the engagement member 110 relative to the base 160. For example and as shown in FIG. 5B, the engagement member 110 may be adjustable from a position A to a position B. The manipulation of the engagement member 110 from the position A to the position B may be associated with an angular displacement α. As described herein, the engagement member 110 moves with the damping assembly 130 and may cause the biasing element 145a to compress therein and exhibit a preload. In this regard, FIG. 5B shows a biasing element angular displacement β₁ that corresponds to the angular displacement of the biasing element 145a caused with the angular displacement α of the engagement member 110. Because the biasing element 145a is arranged at the nominal position 139, the angular displacement α and the biasing element angular displacement β₁ are roughly equivalent. This may be desirable where the measured stiffness of the biasing element 145a is roughly equivalent to the nominal stiffness of the biasing element 145a, so that the biasing element 145a generates a preload that corresponds to the movement of the engagement member 110.

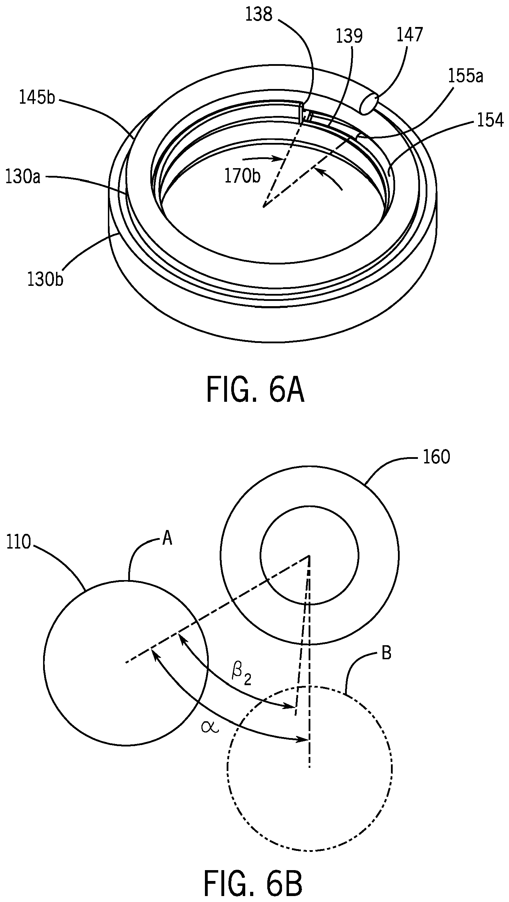

In the example of FIGS. 6A and 6B, the damping assembly 130 is shown associated with the biasing element 145b. The biasing element 145b may generally be a biasing element having a measured stiffness that is greater than the nominal stiffness. In this regard, the biasing element 145b may be connected to the damping assembly 130 with an end portion properly located at an offset from the nominal position 139. The optimal position of the end portion of the biasing element 145b may be located at an angular displacement 170b from the stop feature 138 of the track 137. When the biasing element 145b is properly located relative to the nominal position 139, the angular displacement of the biasing elements ends may be less than the angular displacement of the engagement member 110 relative to the base 160. This may help deliver the desired preload because a stiffer biasing element need be compressed less in order to exhibit the preload of a biasing element having the nominal stiffness. For example and as shown in FIG. 6B, the engagement member 110 may be adjustable from a position A to a position B. The manipulation of the engagement member 110 from the position A to the position B may be associated with the angular displacement α. As described herein, the engagement member 110 moves with the damping assembly 130 and may cause the biasing element 145b to compress therein and exhibit a preload. In this regard, FIG. 6B shows a biasing element angular displacement β₂ that corresponds to the angular displacement of the biasing element 145b caused with the angular displacement α of the engagement member 110. Because the biasing element 145b is arranged at an offset from the nominal position 139, the biasing element angular displacement β₂ is less than the angular displacement α. This may be desirable where the measured stiffness of the biasing element 145b is greater than the nominal stiffness, so that the biasing element 145b generates a preload that is less than what would otherwise be generated if the biasing element 145b were otherwise arranged at the nominal position.

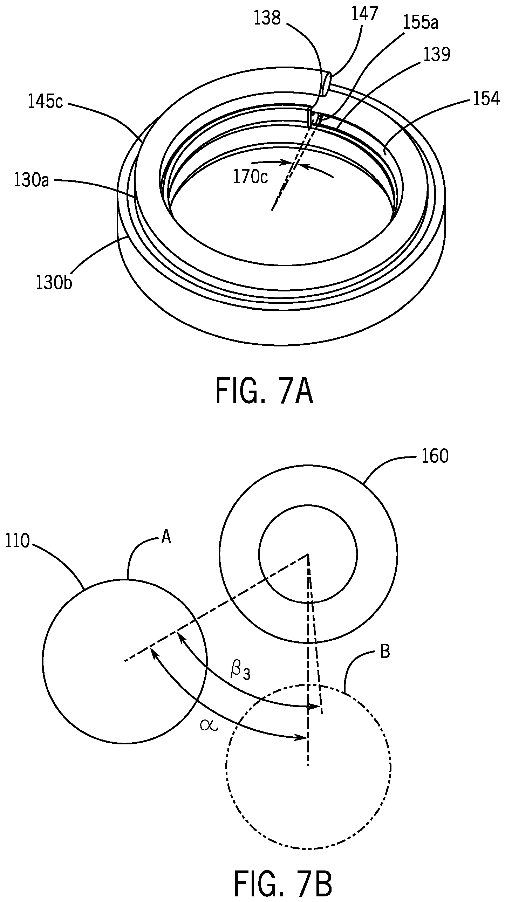

In the example of FIGS. 7A and 7B, the damping assembly 130 is shown associated with the biasing element 145c. The biasing element 145c may generally be a biasing element having a measured stiffness that is less than the nominal stiffness. In this regard, the biasing element 145c may be connected to the damping assembly 130 with an end portion properly located at an offset from the nominal position 139. The optimal position of the end portion of the biasing element 145c may be located at an angular displacement 170c from the stop feature 138 of the track 137. When the biasing element 145c is properly located relative to the stop nominal position, the angular displacement of the biasing elements ends may be greater than the angular displacement of the engagement member 110 relative to the base 160. For example, the biasing element ends may be pre-compressed prior to any angular displacement of the engagement member 110, as one example. This may help deliver the desired preload because a less stiff biasing element need be compressed more in order to exhibit the preload of a biasing element having the nominal stiffness. For example and as shown in FIG. 7B, the engagement member 110 may be adjustable from a position A to a position B. The manipulation of the engagement member 110 from the position A to the position B may be associated with an angular displacement α. As described herein, the engagement member 110 moves with the damping assembly 130 and may cause the biasing element 145c to compress therein and exhibit a preload. In this regard, FIG. 7B shows a biasing element angular displacement β₃ that corresponds to the angular displacement of the biasing element 145c caused with the angular displacement α of the engagement member 110. Because the biasing element 145c is arranged at an offset from the nominal position 139, the biasing element angular displacement β₃ is greater than the angular displacement α. This may be desirable where the measured stiffness of the biasing element 145c is less than the nominal stiffness, so that the biasing element 145c generates a preload that is more than what would otherwise be generated if the biasing element 145c were otherwise arranged at the nominal position.

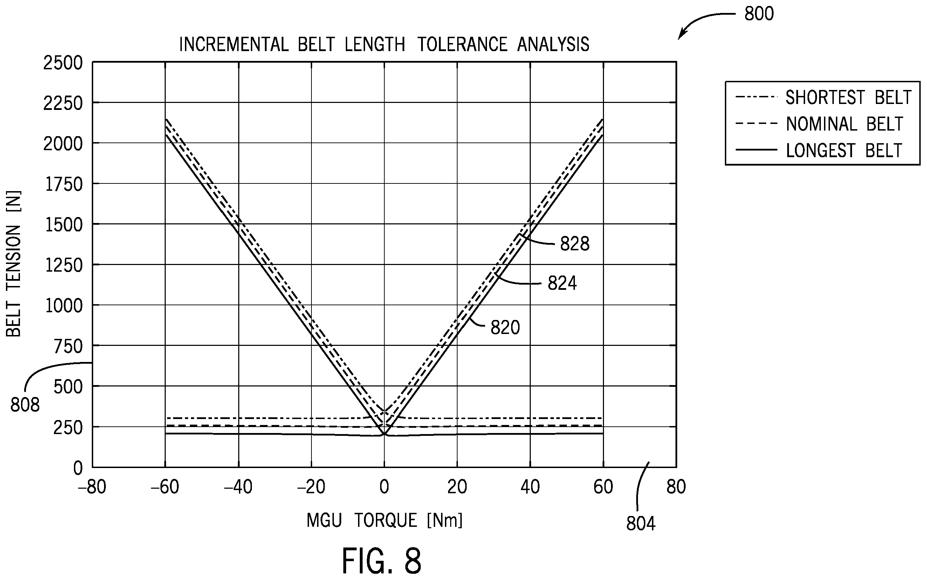

FIG. 8 depicts a diagram 800 showing relationships between torque and belt tension for various belt lengths. In particular, the diagram 800 illustrates a relationship between torque (as measured along torque axis 804) and a belt tension (as measured along the belt tension axis 808) for a conventional tensioner-type device that is not tunable to an actual or measured length of a belt. Typically in such cases, the tensioner-type device would be set with a preload in order to tension the longest tolerable belt. For example, a belt having a maximum positive deviation from a nominal length of the belt. The problem with this outcome is that for belts with shorter than the longest tolerable belt length, the preload is excessively high and may lead to premature component wear. This is shown in the example of FIG. 8, where a curve 820 represents the performance of a "longest belt", a curve 824 represents the performance of a "nominal belt", and a curve 828 represents the performance of a "shortest belt." As shown in the diagram 800, the curve 824 and the curve 828 each show progressive higher values of tension for a given torque, as compared with the acceptable value of tension defined generally by the curve 820.

FIG. 9 depicts a diagram 900 showing the relationship between torque and belt tension for various belt lengths where the belt tensioner devices of the present disclosure (e.g., the tensioner device 104, and variations thereof). In particular, the diagram 900 illustrates a relationship between torque (as measured along torque axis 904) and a belt tension (as measured along the belt tension axis 908) for the tensioner devices of the present disclosure. As described herein, the tensioner devices of the present disclosure may set with a preload in order establish the tension in the belt based on an actual or measured length of the belt. As such, despite variations from a nominal belt length, the belt may exhibit a consistent tension for a given value of torque. This is shown in the example of FIG. 9, where a curve 920 represents the performance of a "longest belt", a curve 924 represents the performance of a "nominal belt", and a curve 928 represents the performance of a "shortest belt." As shown in the diagram 900, each of the curves 920, 924, 928 generally have the same or similar tension for a given value of torque, which may correspond to an acceptable or target design torque for a given system.

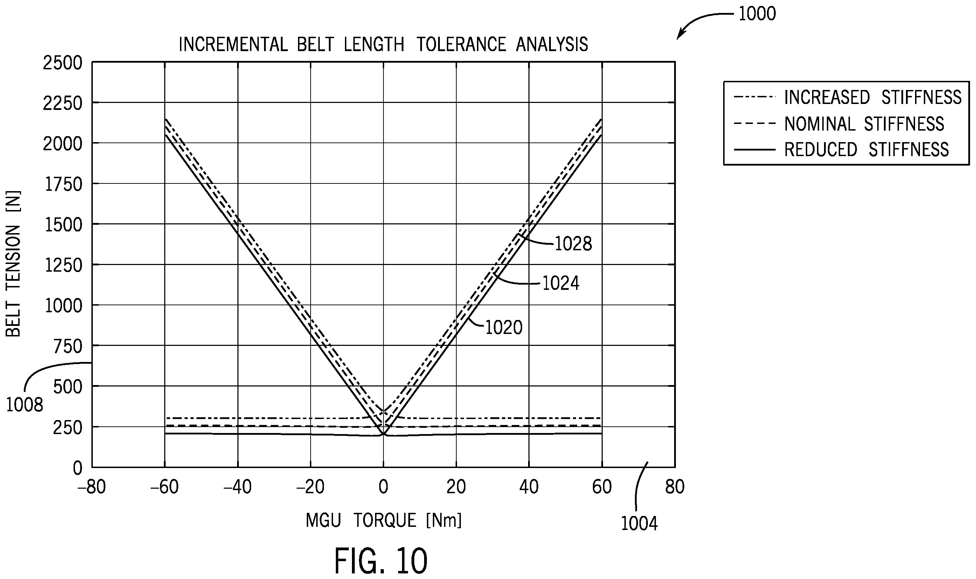

FIG. 10 depicts a diagram 1000 showing relationships between torque and belt tension for various stiffness levels of a biasing element. In particular, the diagram 1000 illustrates a relationship between torque (as measured along torque axis 1004) and a belt tension (as measured along the belt tension axis 1008) for a conventional tensioner-type device that is not tunable to an actual or measured stiffness of the biasing element. Typically in such cases, the tensioner-type device would be set with a preload based on a nominal stiffness of the spring. For example, a biasing element having a measured stiffness that corresponds to the nominal stiffness of the biasing element. The problem with this outcome is that for biasing element with a stiffness level that is different from the nominal stiffness, the preload may vary from the design target, which may lead to premature component wear or otherwise poor performance. This is shown in the example of FIG. 10, where a curve 1020 represents the performance of an "increased stiffness" biasing element", a curve 1024 represents the performance of a "nominal stiffness" biasing element, and a curve 1028 represents the performance of a "reduced stiffness" biasing element. As shown in the diagram 1000, the curve 1024 and the curve 1028 each show different values of tension for a given torque, as compared with an acceptable value of tension.

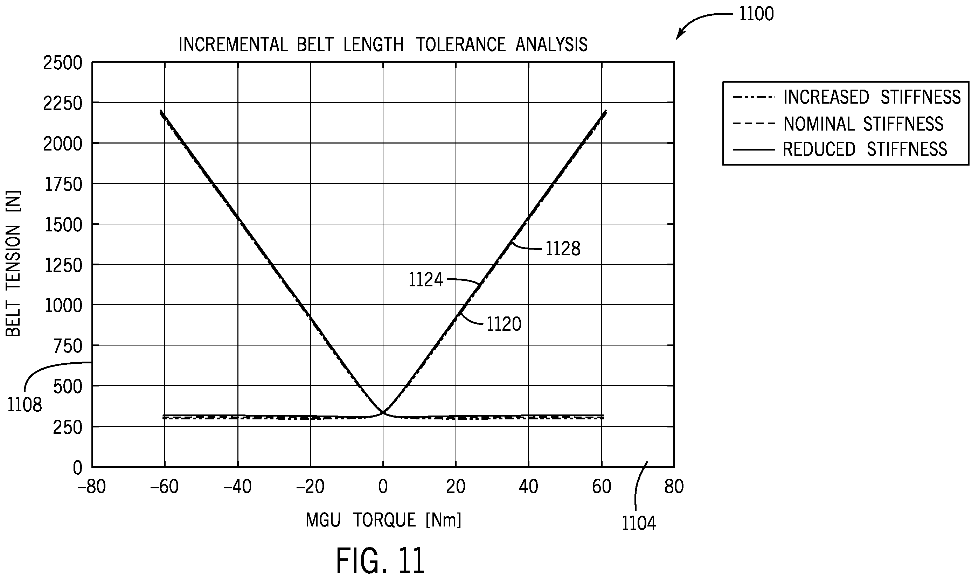

FIG. 11 depicts a diagram 1100 showing the relationship between torque and belt tension for various stiffness levels of a biasing element for the belt tensioner devices of the present disclosure (e.g., the tensioner device 104, and variations thereof). In particular, the diagram 1100 illustrates a relationship between torque (as measured along torque axis 1104) and a belt tension (as measured along the belt tension axis 1108) for the tensioner devices of the present disclosure. As described herein, the tensioner devices of the present disclosure are arranged with the biasing element positioned to define a deflection based on a measured stiffness of the biasing element. As such, despite variations from a nominal stiffness, the belt may exhibit a consistent tension for a given value of torque. This is shown in the example of FIG. 11, where a curve 1120 represents the performance of an "increased stiffness" biasing element, a curve 1124 represents the performance of a "nominal stiffness" biasing element, and a curve 1128 represents the performance of a "reduced stiffness" biasing element. As shown in the diagram 1100, each of the curves 1120, 1124, 1128 generally have the same or similar tension for a given value of torque, which may correspond to an acceptable or target design torque for a given system.

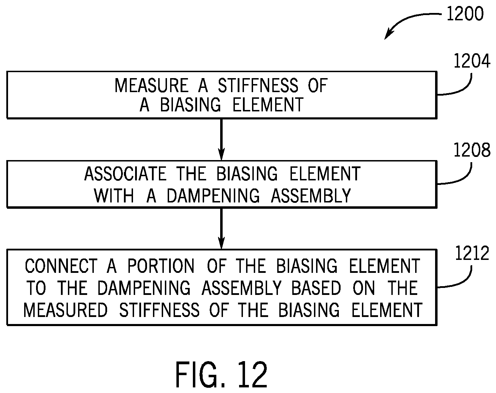

To facilitate the reader's understanding of the various functionalities of the examples discussed herein, reference is now made to the flow diagram in FIG. 12, which illustrates process 1200. While specific steps (and orders of steps) of the methods presented herein have been illustrated and will be discussed, other methods (including more, fewer, or different steps than those illustrated) consistent with the teachings presented herein are also envisioned and encompassed with the present disclosure.

At operation 1204, a stiffness of the biasing element is measured. For example and with reference to FIGS. 3A-3C a stiffness of the biasing elements 145a, 145b, 145c may be measured. For example, the biasing elements 145a, 145b, 145c may be subjected to various tests in which a known force is applied to the respective biasing element. Subsequently, the deflection of the biasing elements 145a, 145b, 145c may be measured, such as by using deflection sensors and/or other instrument that may determine an initial (unload) and final (loaded) position of the biasing element. Using Hooke's law, the stiffness of each spring may be calculated in terms of a unit force per unit of deflection. In the example of FIGS. 3A-3C, the biasing element 145a may have a stiffness kₙ, the biasing element 145b may have a stiffness k_{n+Δt}, and the biasing element 145c may have a stiffness k_{n-Δt}.

At operation 1208, the biasing element is associated with a damping assembly of a tensioner device. For example and with reference to FIGS. 1 and 4, the biasing element 145 is associated with the damping assembly 130 of the tensioner device 104. The tensioner device 104 has the engagement member 110 with the engagement surface 112 for engaging the belt. The engagement member 110 may be generally angularly displaceable relative to the base 160 of the tensioner device 104 in order to define a target tension in the belt.

At operation 1212, a portion of the biasing element is connected to the damping assembly at a position based on the measured stiffness of the biasing element. At this position, the biasing element and damping assembly are used to define a value of an angular displacement of the engagement member relative to the biasing element in order to create the target tension in the belt when the belt in engaged by the tensioner device. For example and with reference to FIGS. 4-7B, the biasing element 145 is connected the damping assembly at the nominal position 139 (or an offset therefrom) based on the measured stiffness of the biasing element. For a biasing element 145a having a measured stiffness that is equivalent to the nominal stiffness, the biasing element 145a may be arranged with an end at the nominal position. This may allow the biasing element 145a to be deflected corresponding with the angular movement of the engagement member 110. For a biasing element 145b having a measured stiffness that is greater than the nominal stiffness, the biasing element 145b may be arranged with an end at an offset from the nominal position. This may allow the biasing element 145b to be deflected in an amount that is less than the angular movement of the engagement member 110. This may be desirable where a stiffer spring need deflect less to achieve a target preload. And for a biasing element 145c having a measured stiffness that is less than the nominal stiffness, the biasing element 145c may be arranged with an end at an offset from the nominal position. This may allow the biasing element 145c to be deflected an amount that is greater than the angular movement of the engagement member 110. This may be desirable where a less stiff spring need deflect more to achieve a target preload.

The method 1200 may also include arranging the biasing in a loaded configuration or otherwise connecting the biasing element to the damping assembly based on a measured to length of the belt to create the target tension therein. For example and with reference to FIGS. 1-2C, the method 1200 may include measuring a length of and of the belts 190a, 190b, 190c, including using a jig or other tooling. In some cases, the length may be measured using a laser. The biasing element 145 may in turn be manipulating into a loaded configuration with respect to the damping assembly 130 based on the measured length of the belt. For example, an end of the biasing element 145 may be properly located on the damping assembly 130 in order to control the spring deflection, such as by locating the end of the biasing element at or at an offset from the nominal position 139, as shown and described with relation to FIGS. 5A-7B.

## Claims

1. A tensioner device (104) for creating a target tension in a belt (190a), the tensioner device comprising:
a base (160);
a damping assembly (130) associated with the base (160) and configured to rotate relative thereto;
a biasing element (145) comprising a torsion spring exhibiting a measured stiffness and having a first portion defined by a first end of the torsion spring, wherein the first end is connected to the base (160), and a second portion defined by a second end of the torsion spring, the biasing element (145) having a hollow center (152);
an engagement member (110) for engaging the belt, the engagement member (110) associated with the damping assembly (130) for movement therewith and angularly displaceable relative to the base (160) and the biasing element (145) about a lever arm axis R-R to tension the belt (190a); and
an arm (120) connecting the damping assembly (130) and the engagement member (110) and defining a range of the angular displacement of the engagement member (110)
**characterized in that** the second end is welded to the damping assembly (130), and **in that** the damping assembly (130) comprises:
an insert (130a) adapted to receive the biasing element (145) and defining a biasing element receiving portion (136) to which the second portion of the biasing element (145) is welded, the insert (130) having an insert base (135) and a first opening (134) to allow for introduction of other components of the tensioner device therethrough; and
a shoe (130b) for receiving the insert (130a), the shoe (130b) defining an insert receiving portion (132) that is adapted to receive the insert (130a), wherein the insert base (135) is received into the insert receiving portion (132), and the insert base (135) is secured in the insert receiving portion (132), the shoe (130b) having a second opening (133) to allow for introduction of other components of the tensioner device therethrough, wherein the hollow center (152) of the biasing element (145) and the first and second openings (134, 133) are all aligned with one another and positioned along the lever axis R-R;
wherein the arm (120) connects the shoe (130b) and the engagement member (110), wherein the shoe (130b) defines an interface between the insert (130a) and the arm (120);
wherein the biasing element (145) is welded to the damping assembly (130) at a position determined by the measured stiffness to define a value of the angular displacement of the engagement member (110) relative to the biasing element (145) and create the target tension in the belt (190a).

2. The tensioner device (104) of claim 1, wherein:
the angular displacement of the engagement member (110) relative to the biasing element (145) compresses the biasing element (145) and defines a preload force stored therein; and
the value of the angular displacement of the engagement member (110) relative to the biasing element (145) is different than a value of the angular displacement of the engagement member (110) relative to the base (160) to tune the preload force based on the measured stiffness of the biasing element (145).

3. The tensioner device (104) of claim 2, wherein:
the biasing element (145) has a nominal stiffness; and either:
the measured stiffness is greater than the nominal stiffness, and the value of the angular displacement of the biasing element (145) is less than the value of the angular displacement of the engagement member (110) relative to the base (160); or
the measured stiffness is less than the nominal stiffness, and the value of the angular displacement of the biasing element (145) is greater than the value of the angular displacement of the engagement member (110) relative to the base (160).,

4. The tensioner device (104) of claim 1, wherein:
the belt (190a) has a measured length; and
the biasing element (145) is arranged in a loaded configuration within the damping assembly (130) via the weld (154) to define a preload force that corresponds to the measured length of the belt (190a) to create the target tension when the belt (190a) is engaged with the tensioner device.

5. An assembly comprising:
a belt (190a) having a measured length; and
a tensioner device (104) according to claim 4 and configured to engage the belt (190a) and define the target tension in the belt (190a), wherein the biasing element (145) is arranged in the loaded configuration relative to the damping assembly (130) that corresponds to the measured stiffness of the biasing element (145) and the measured length of the belt (190a) to create the target tension in the belt (190a) when the belt (190a) is engaged by the tensioner device (104).

6. The assembly of claim 5, wherein the loaded configuration corresponds to an angular arrangement of the first and second portions of the biasing element (145) that are adapted to define a deflection of the biasing element (145) for creating the target tension in the belt (109a).

7. The assembly of claim 6, wherein:
the angular displacement of the engagement member (110) relative to the second portion of the biasing element (145) compresses the biasing element (145) and defines the preload force stored therein; and
a value of the angular displacement of the engagement member (110) relative to the biasing element (145) is different than a value of the angular displacement of the engagement member (110) relative to the base (160) to tune the preload force, based on the measured stiffness of the biasing element (145).

8. The tensioner device of claim 1, or the assembly of claim 5, wherein the insert (130a) defines a track (136) adapted to receive the biasing element (145), and the shoe (130b) defines an interface between the insert (130a) and an arm (120) of the tensioner device (104), the shoe (130b) connected to the arm (120) for defining corresponding movement of the arm (120) and the engagement member (110).

9. The tensioner of claim 1, or the assembly of claim 5, wherein the engagement member (110) comprises a pulley.

10. A method of manufacturing a tensioner device (104) and belt (190a) assembly according to any of claims 5 to 9, the method comprising:
measuring a stiffness of the biasing element (145);
welding the second portion of the biasing element (145) to the insert of the damping assembly (130) of the tensioner device (104) at a position based on the measured stiffness of the biasing element (145) to define the value of the angular displacement of the engagement member (110) relative to the biasing element (145), thereby creating the target tension in the belt (190a) when the belt (190a) is engaged by the tensioner device (104).

11. The method of claim 10, further comprising:
associating the belt (190a) with the tensioner device (104); and
determining the preload force for the biasing element (145) that is adapted to create the target tension in the belt (190a).

12. The method of claim 11, further comprising, prior to welding the second portion of the biasing element (145) to the insert of the damping assembly:
measuring a length of the belt (190a); and
manipulating the biasing element (145) into a loaded configuration relative to the damping assembly (130) based on the measured length of the belt (190a).

13. The method of claim 10, wherein welding the second portion of the biasing element (145) to the insert of the damping assembly (130)comprises welding the second portion of the biasing element (145) to the insert (130a) at an offset from a nominal position based on a deviation of the measured stiffness of the biasing element from a nominal stiffness of the biasing element.

## Patentansprüche

1. Spannvorrichtung (104) zum Erzeugen einer Sollspannung in einem Riemen (190a), wobei die Spannvorrichtung Folgendes umfasst:
eine Basis (160);
eine Dämpfungsanordnung (130), die der Basis (160) zugeordnet und dazu ausgelegt ist, sich in Bezug dazu zu drehen;
ein Vorspannungselement (145), das eine Torsionsfeder umfasst, die eine gemessene Steifigkeit vorweist und einen ersten Abschnitt aufweist, der durch ein erstes Ende der Torsionsfeder definiert ist, wobei das erste Ende mit der Basis (160) verbunden ist, und einen zweiten Abschnitt, der durch ein zweites Ende der Torsionsfeder definiert ist, wobei das Vorspannungselement (145) eine hohle Mitte (152) aufweist;
ein Eingriffselement (110) zum Eingreifen in den Riemen, wobei das Eingriffselement (110) der Dämpfungsanordnung (130) zur Bewegung damit zugeordnet und in Bezug zur Basis (160) und zum Vorspannungselement (145) um eine Hebelarmachse R-R winklig verschiebbar ist, um den Riemen (190a) zu spannen; und
einen Arm (120), der die Dämpfungsanordnung (130) und das Eingriffselement (110) miteinander verbindet und einen Bereich der Winkelverschiebung des Eingriffselements (110) definiert, **dadurch gekennzeichnet, dass** das zweite Ende mit der Dämpfungsanordnung (130) verschweißt ist und dass die Dämpfungsanordnung (130) Folgendes umfasst:
einen Einsatz (130a), der dazu eingerichtet ist, das Vorspannungselement (145) aufzunehmen, und einen Vorspannungselementaufnahmeabschnitt (136), mit dem der zweite Abschnitt des Vorspannungselements (145) verschweißt ist, definiert, wobei der Einsatz (130) eine Einsatzbasis (135) und eine erste Öffnung (134) aufweist, um das Einbringen weiterer Bauteile der Spannvorrichtung dort hindurch zuzulassen; und
einen Schuh (130b) zur Aufnahme des Einsatzes (130a), wobei der Schuh (130b) einen Einsatzaufnahmeabschnitt (132) definiert, der dazu eingerichtet ist, den Einsatz (130a) aufzunehmen, wobei die Einsatzbasis (135) in dem Einsatzaufnahmeabschnitt (132) aufgenommen wird und die Einsatzbasis (135) in dem Einsatzaufnahmeabschnitt (132) befestigt wird, wobei der Schuh (130b) eine zweite Öffnung (133) aufweist, um das Einbringen weiterer Bauteile der Spannvorrichtung dort hindurch zuzulassen, wobei die hohle Mitte (152) des Vorspannungselements (145) und die erste und zweite Öffnung (134, 133) alle miteinander ausgerichtet und entlang der Hebelachse R-R ausgerichtet sind;
wobei der Arm (120) den Schuh (130b) und das Eingriffselement (110) miteinander verbindet, wobei der Schuh (130b) eine Schnittstelle zwischen dem Einsatz (130a) und dem Arm (120) definiert;
wobei das Vorspannungselement (145) an einer Position, die durch die gemessene Steifigkeit bestimmt wird, mit der Dämpfungsanordnung (130) verschweißt ist, um einen Wert der Winkelverschiebung des Eingriffselements (110) in Bezug zum Vorspannungselement (145) zu definieren und eine Sollspannung im Riemen (190a) zu erzeugen.

2. Spannvorrichtung (104) nach Anspruch 1, wobei:
die Winkelverschiebung des Eingriffselements (110) in Bezug zum Vorspannungselement (145) das Vorspannungselement (145) zusammendrückt und eine darin gespeicherte Vorspannkraft definiert und
der Wert der Winkelverschiebung des Eingriffselements (110) in Bezug zum Vorspannungselement (145) ein anderer ist als der Wert der Winkelverschiebung des Eingriffselements (110) in Bezug zur Basis (160), um die Vorspannkraft basierend auf der gemessenen Steifigkeit des Vorspannungselements (145) einzustellen.

3. Spannvorrichtung (104) nach Anspruch 2, wobei:
das Vorspannungselement (145) eine Nennsteifigkeit aufweist und entweder:
die gemessene Steifigkeit größer ist als die Nennsteifigkeit und der Wert der Winkelverschiebung des Vorspannungselements (145) geringer ist als der Wert der Winkelverschiebung des Eingriffselements (110) in Bezug zur Basis (160) oder
die gemessene Steifigkeit geringer ist als die Nennsteifigkeit und der Wert der Winkelverschiebung des Vorspannungselements (145) größer ist als der Wert der Winkelverschiebung des Eingriffselements (110) in Bezug zur Basis (160).

4. Spannvorrichtung (104) nach Anspruch 1, wobei:
der Riemen (190a) eine gemessene Länge aufweist und
das Vorspannungselement (145) über die Schweißnaht (154) in einer Belastungskonfiguration in der Dämpfungsanordnung (130) angeordnet ist, um eine Vorspannkraft zu definieren, die der gemessenen Länge des Riemens (190a) entspricht, um die Sollspannung zu erzeugen, wenn der Riemen (190a) mit der Spannvorrichtung in Eingriff ist.

5. Anordnung, Folgendes umfassend:
einen Riemen (190a), der eine gemessene Länge aufweist; und
eine Spannvorrichtung (104) nach Anspruch 4, die dazu ausgelegt ist, in den Riemen (190a) einzugreifen und die Sollspannung des Riemens (190a) zu definieren, wobei das Vorspannungselement (145) in der Belastungskonfiguration in Bezug zur Dämpfungsanordnung (130) angeordnet ist, die der gemessenen Steifigkeit des Vorspannungselements (145) und der gemessenen Länge des Riemens (190a) entspricht, um die Sollspannung in dem Riemen (190a) zu erzeugen, wenn der Riemen (190a) mit der Spannvorrichtung (104) in Eingriff ist.

6. Anordnung nach Anspruch 5, wobei die Belastungskonfiguration einer Winkelanordnung des ersten und zweiten Abschnitts des Vorspannungselements (145) entspricht, die dazu eingerichtet sind, eine Ablenkung des Vorspannungselements (145) zu definieren, um die Sollspannung in dem Riemen (109a) zu erzeugen.

7. Anordnung nach Anspruch 6, wobei:
die Winkelverschiebung des Eingriffselements (110) in Bezug zum zweiten Abschnitt des Vorspannungselements (145) das Vorspannungselement (145) zusammendrückt und die darin gespeicherte Vorspannkraft definiert; und
der Wert der Winkelverschiebung des Eingriffselements (110) in Bezug zum Vorspannungselement (145) ein anderer ist als der Wert der Winkelverschiebung des Eingriffselements (110) in Bezug zur Basis (160), um die Vorspannkraft basierend auf der gemessenen Steifigkeit des Vorspannungselements (145) einzustellen.

8. Spannvorrichtung nach Anspruch 1 oder Anordnung nach Anspruch 5, wobei der Einsatz (130a) eine Schiene (136) definiert, die dazu eingerichtet ist, das Vorspannungselement (145) aufzunehmen, und der Schuh (130b) eine Schnittstelle zwischen dem Einsatz (130a) und dem Arm (120) der Spannungsvorrichtung (104) definiert, wobei der Schuh (130b) mit dem Arm (120) verbunden ist, um eine zugehörige Bewegung des Arms (120) und des Eingriffselements (110) zu definieren.

9. Spannvorrichtung nach Anspruch 1 oder Anordnung nach Anspruch 5, wobei das Eingriffselement (110) eine Riemenscheibe umfasst.

10. Verfahren zur Herstellung einer Anordnung aus einer Spannvorrichtung (104) und einem Riemen (190a) nach einem der Ansprüche 5 bis 9, wobei das Verfahren Folgendes umfasst:
Messen der Steifigkeit des Vorspannungselements (145);
Verschweißen des zweiten Abschnitts des Vorspannungselements (145) mit dem Einsatz der Dämpfungsanordnung (130) der Spannvorrichtung (104) an einer Position basierend auf der gemessenen Steifigkeit des Vorspannungselements (145), um den Wert der Winkelverschiebung des Eingriffselements (110) in Bezug zum Vorspannungselement (145) zu definieren, wodurch die Sollspannung im Riemen (190a) erzeugt wird, wenn der Riemen (190a) mit der Spannvorrichtung (104) in Eingriff ist.

11. Verfahren nach Anspruch 10, ferner umfassend:
Zuordnen des Riemens (190a) der Spannvorrichtung (104) und
Bestimmen der Vorspannkraft für das Vorspannungselement (145), das dazu eingerichtet ist, die Sollspannung im Riemen (190a) zu erzeugen.

12. Verfahren nach Anspruch 11, vor dem Verschweißen des zweiten Abschnitts des Vorspannungselements (145) mit dem Einsatz der Dämpfungsanordnung ferner umfassend:
Messen der Länge des Riemens (190a) und
Manipulieren des Vorspannungselements (145) in eine Belastungskonfiguration in Bezug zur Dämpfungsanordnung (130) basierend auf der gemessenen Länge des Riemens (190a).

13. Verfahren nach Anspruch 10, wobei das Verschweißen des zweiten Abschnitts des Vorspannungselements (145) mit dem Einsatz der Dämpfungsanordnung (130) das Verschweißen des zweiten Abschnitts des Vorspannungselements (145) mit dem Einsatz (130a) basierend auf einer Abweichung der gemessenen Steifigkeit des Vorspannungselements von einer Nennsteifigkeit des Vorspannungselements von einer Nennposition versetzt umfasst.

## Revendications

1. Dispositif tendeur (104) pour créer une tension cible dans une courroie (190a), le dispositif tendeur comprenant :
une base (160) ;
un ensemble amortisseur (130) associé à la base (160) et configuré pour tourner par rapport à celle-ci ;
un élément de sollicitation (145) comprenant un ressort de torsion présentant une rigidité mesurée et ayant une première partie définie par une première extrémité du ressort de torsion, la première extrémité étant reliée à la base (160), et une seconde partie définie par une seconde extrémité du ressort de torsion, l'élément de sollicitation (145) ayant un centre creux (152) ;
un élément de contact (110) destiné à être en contact avec la courroie, l'élément de contact (110) étant associé à l'ensemble amortisseur (130) pour se déplacer avec celui-ci et pouvant être déplacé angulairement par rapport à la base (160) et à l'élément de sollicitation (145) autour d'un axe de bras de levier R-R pour tendre la courroie (190a) ; et
un bras (120) reliant l'ensemble amortisseur (130) et l'élément de contact (110) et définissant une plage de déplacement angulaire de l'élément de contact (110), **caractérisé en ce que** la seconde extrémité est soudée à l'ensemble amortisseur (130), et **en ce que** l'ensemble amortisseur (130) comprend :
une garniture (130a) conçue pour recevoir l'élément de sollicitation (145) et définissant une partie de réception d'élément de sollicitation (136) à laquelle la seconde partie de l'élément de sollicitation (145) est soudée, la garniture (130) présentant une base de garniture (135) et une première ouverture (134) permettant l'introduction d'autres composants du dispositif tendeur à travers celle-ci ; et
un patin (130b) destiné à recevoir la garniture (130a), le patin (130b) définissant une partie de réception de garniture (132) adaptée pour recevoir la garniture (130a), la base de garniture (135) étant reçue dans la partie de réception de garniture (132), et la base de garniture (135) étant fixée dans la partie de réception de garniture (132), le patin (130b) ayant une seconde ouverture (133) pour permettre l'introduction d'autres composants du dispositif tendeur à travers celle-ci, le centre creux (152) de l'élément de sollicitation (145) et les première et seconde ouvertures (134, 133) étant tous alignés les uns avec les autres et positionnés le long de l'axe de levier R-R ;
le bras (120) reliant le patin (130b) et l'élément de contact (110), le patin (130b) définissant une interface entre la garniture (130a) et le bras (120) ;
l'élément de sollicitation (145) étant soudé à l'ensemble amortisseur (130) à une position déterminée par la rigidité mesurée afin de définir une valeur du déplacement angulaire de l'élément de contact (110) par rapport à l'élément de sollicitation (145) et de créer la tension cible dans la courroie (190a).

2. Dispositif tendeur (104) selon la revendication 1, dans lequel :
le déplacement angulaire de l'élément de contact (110) par rapport à l'élément de sollicitation (145) comprime l'élément de sollicitation (145) et définit une force de précharge accumulée dans celui-ci ; et
la valeur du déplacement angulaire de l'élément de contact (110) par rapport à l'élément de sollicitation (145) est différente d'une valeur du déplacement angulaire de l'élément de contact (110) par rapport à la base (160) pour régler la force de précharge en fonction de la rigidité mesurée de l'élément de sollicitation (145).

3. Dispositif tendeur (104) selon la revendication **2,** dans lequel :
l'élément de sollicitation (145) présente une rigidité nominale ; et :
la rigidité mesurée est supérieure à la rigidité nominale, et la valeur du déplacement angulaire de l'élément de sollicitation (145) est inférieure à la valeur du déplacement angulaire de l'élément de contact (110) par rapport à la base (160) ; ou
la rigidité mesurée est inférieure à la rigidité nominale, et la valeur du déplacement angulaire de l'élément de sollicitation (145) est supérieure à la valeur du déplacement angulaire de l'élément de contact (110) par rapport à la base (160).

4. Dispositif tendeur (104) selon la revendication 1, dans lequel :
la courroie (190a) a une longueur mesurée ; et
l'élément de sollicitation (145) est disposé dans une configuration chargée à l'intérieur de l'ensemble amortisseur (130) via la soudure (154) pour définir une force de précharge qui correspond à la longueur mesurée de la courroie (190a) afin de créer la tension cible lorsque la courroie (190a) est en contact avec le dispositif tendeur.

5. Ensemble comprenant :
une courroie (190a) ayant une longueur mesurée ; et
un dispositif tendeur (104) selon la revendication 4 et configuré pour être en contact avec la courroie (190a) et définir la tension cible dans la courroie (190a), dans lequel l'élément de sollicitation (145) est disposé dans la configuration chargée par rapport à l'ensemble amortisseur (130) qui correspond à la rigidité mesurée de l'élément de sollicitation (145) et à la longueur mesurée de la courroie (190a) pour créer la tension cible dans la courroie (190a) lorsque la courroie (190a) est en contact avec le dispositif tendeur (104).

6. Ensemble selon la revendication 5, dans lequel la configuration chargée correspond à un agencement angulaire des première et seconde parties de l'élément de sollicitation (145) qui sont adaptées pour définir une déformation de l'élément de sollicitation (145) pour créer la tension cible dans la courroie (109a).

7. Ensemble selon la revendication **6,** dans lequel :
le déplacement angulaire de l'élément de contact (110) par rapport à la seconde partie de l'élément de sollicitation (145) comprime l'élément de sollicitation (145) et définit la force de précharge accumulée dans celui-ci ; et
une valeur du déplacement angulaire de l'élément de contact (110) par rapport à l'élément de sollicitation (145) est différente d'une valeur du déplacement angulaire de l'élément de contact (110) par rapport à la base (160) pour régler la force de précharge en fonction de la rigidité mesurée de l'élément de sollicitation (145) .

8. Dispositif tendeur selon la revendication 1, ou ensemble selon la revendication 5, dans lequel la garniture (130a) définit une rainure (136) adaptée pour recevoir l'élément de sollicitation (145), et le patin (130b) définit une interface entre la garniture (130a) et un bras (120) du dispositif tendeur (104), le patin (130b) étant relié au bras (120) pour définir un mouvement correspondant du bras (120) et de l'élément de contact (110).

9. Tendeur selon la revendication 1, ou ensemble selon la revendication 5, dans lequel l'élément de contact (110) comprend une poulie.

10. Procédé de fabrication d'un ensemble composé d'un dispositif tendeur (104) et d'une courroie (190a) selon l'une quelconque des revendications 5 à 9, le procédé comprenant :
mesurer une rigidité de l'élément de sollicitation (145) ;
souder la seconde partie de l'élément de sollicitation (145) à la garniture de l'ensemble amortisseur (130) du dispositif tendeur (104) à une position basée sur la rigidité mesurée de l'élément de sollicitation (145) pour définir la valeur du déplacement angulaire de l'élément de contact (110) par rapport à l'élément de sollicitation (145), de façon à créer ainsi la tension cible dans la courroie (190a) lorsque la courroie (190a) est en contact avec le dispositif tendeur (104).

11. Procédé selon la revendication 10, comprenant en outre :
associer la courroie (190a) au dispositif tendeur (104) ; et
déterminer la force de précharge pour l'élément de sollicitation (145) qui est adaptée pour créer la tension cible dans la courroie (190a).

12. Procédé selon la revendication 11, comprenant en outre, avant le soudage de la seconde partie de l'élément de sollicitation (145) à la garniture de l'ensemble amortisseur :
mesurer une longueur de la courroie (190a) ; et
manipuler l'élément de sollicitation (145) de façon à le placer dans une configuration chargée par rapport à l'ensemble amortisseur (130) en fonction de la longueur mesurée de la courroie (190a).

13. Procédé selon la revendication 10, dans lequel le soudage de la seconde partie de l'élément de sollicitation (145) à la garniture de l'ensemble amortisseur (130) comprend le soudage de la seconde partie de l'élément de sollicitation (145) à la garniture (130a) avec un décalage par rapport à une position nominale basé sur un écart de la rigidité mesurée de l'élément de sollicitation par rapport à une rigidité nominale de l'élément de sollicitation.
